# EUROPEAN PATENT SPECIFICATION

(11) **EP 4 574 318 B1**
(45) Date of publication and mention of the grant of the patent: **16.09.2026**
(21) Application number: 23217914.3
(22) Date of filing: 19.12.2023
(51) Int. Cl.: B23B 31/02, B23B 29/034

(54) **ADJUSTABLE TOOL HOLDER**
VERSTELLBARER WERKZEUGHALTER
PORTE-OUTIL RÉGLABLE

(43) Date of publication of application: 25.06.2025
(73) Proprietor: AB Sandvik Coromant, 811 81 Sandviken (SE)
(72) Inventor: LIEBAUG, Christian, 811 81 Sandviken (SE); FRANK, Peter, 811 81 Sandviken (SE)
(74) Representative: Sandvik

(56) References cited:
- DE-A1- 19 736 741
- JP-A- H08 267 307
- US-A- 2 511 884

## Description

The invention relates to an adjustable tool holder for a rotating material removal tool according to the preamble of claim 1. An example of such a tool holder is known from JPH08267307A.

The invention further relates to a method for adjusting the drill diameter of a rotating material removal tool being mounted on a tool holder. The tool to be held is of the type having at least one cut-ting element and preferably at least two cutting elements. An exemplary tool is a drilling tool equipped with one center insert and one periphery insert. The insert both being stationary with respect to the tool shank. In order to adjust the diameter of the hole to be drilled, the entire tool can be radially displaced relative to the axis of rotation. The resulting eccentric positioning of the tool can be accepted as long as the displacement is in a direction parallel with the cutting edges of the inserts. Otherwise a core remaining within the hole is becoming too big thus being able to disturb the balance of the tool leading to damages of the workpiece and/or the inserts and/or even to the entire tool.

There are tool holders that fulfill this condition. However, these tool holders require a large number of components that can move relative to each other. They are therefore expensive to manufacture and complicated to handle.

It is therefore an object of the invention to provide an adjustable tool holder being inexpensive to manufacture and easy to handle.

The object according to a first aspect of the invention is achieved by providing an adjustable tool holder according to claim 1 that defines an axis of rotation and along the axis of rotation has a proximal end section and a distal end section, wherein the tool holder at the proximal end section comprises a body portion, the body portion including a mounting adapted for direct or indirect attachment to a machine spindle, wherein the tool holder at the distal end section comprises an inner sleeve and a slider, the inner sleeve including a tool fitting bore for holding the material removal tool and a rotationally symmetrical outer surface, the tool fitting bore and the rotationally symmetrical outer surface being eccentric relative to each other, thereby forming a circumferential wall having a varying wall thickness in the circumferential direction, wherein the slider is arranged to rotatably receive the rotationally symmetrical outer surface of the inner sleeve, wherein the body portion comprises a first guide element and a second guide element, wherein the inner sleeve further comprises a third guide element interacting with the first guide element, thereby allowing a linear movement of the inner sleeve relative to the body portion in a first direction perpendicular to the axis of rotation, wherein the linear movement of the inner sleeve relative to the body portion is aligned such that a center line of the tool fitting bore in a center position coincides with the axis of rotation, wherein the slider comprises a fourth guide element interacting with the second guide element, thereby, allowing a linear movement of the slider relative to the body portion in a second direction perpendicular to the axis of rotation and wherein the first direction is different from the second direction.

In case of "direct attachment" to a machine spindle, the tool holder itself is machine adapted. In case of "indirect attachment" to a machine spindle, the tool holder requires an additional component or adapter which is machine adapted as well as adapted to receive the tool holder.

According to a preferred embodiment the first direction, i.e. the direction of linear movement of the inner sleeve relative to the body portion, and the second direction, i.e. the direction of the linear movement of the slider relative to the body portion, are perpendicular to each other.

According to another preferred embodiment the slider comprises a bore for rotatably seating or receiving the inner sleeve.

A center line of the bore in the slider, preferably, does not run through the center of mass of the slider. That, for example, can be achieved by a bore being eccentric with regard to a generally cylindrical slider. This feature serves to minimize an imbalance of the tool holder when the slider is shifted in response to the inner sleeve being adjusted.

The first guide element is, for example, a first groove or pocket formed into the body portion.

The third guide element according to one embodiment comprises a journal fixedly attached to the inner sleeve and coaxially arranged to the center line of the tool fitting bore, whereby the journal is inserted into and guided within the first groove or pocket, thereby, creating a line contact.

The journal according to this embodiment preferably is integrally formed with the inner sleeve.

The third guide element according to another embodiment is formed by an insert element, the insert element comprising a slot nut section and a pivot section, whereby the slot nut section has two opposing parallel side faces being guided within the groove or pocket, thereby creating a surface contact, and whereby the pivot section protrudes into the tool fitting bore, thereby forming a pivot bearing.

The second guide element is, for example, a second groove or pocket formed into the body portion, whereby the slider comprises a flange portion providing two opposing parallel side faces being guided within the second groove, thereby creating a surface contact.

The slider preferably comprises a flange portion fixable to the body portion by means of a screw connection.

The slider further preferably comprises a shaft portion, wherein at least one threaded hole is provided in the shaft portion in a radial direction with regard to the axis of rotation for receiving a clamping bolt for fixation of the material removal tool.

The inner sleeve preferably comprises an aperture through the circumferential wall for the passage of a clamping bolt.

The aperture is a slot hole extending with its longitudinal extension in circumferential direction.

The slot hole preferably has a longitudinal extension in the circumferential direction over an angle of at least 30°, preferably at least 60°, and at most 180°, preferably at most 120°.

The object according to a second aspect of the invention is further achieved by providing a method according to claim 15 for adjusting the drill diameter of a rotating material removal tool being mounted on a tool holder according to the first aspect, wherein the inner sleeve is rotated relative to the slid-er, thereby linearly moving the inner sleeve relative to the body portion in a first direction perpendicular to the axis of rotation and linearly moving the slider relative to the body portion in a second direction perpendicular to the axis of rotation, and wherein the first direction is different from the second direction.

It is to be understood that both the foregoing general description and the following detailed description are exemplary and explanatory and are intended to provide further explanation of the invention as claimed.

The following detailed description can be read in connection with the accompanying drawings in which like numerals designate like elements and in which:
Figure 1A is a top view of a first embodiment of a tool holder according to the invention having a first adjustment;
Figure 1B is a cross section through the first embodiment of the tool holder along the plane A - A indicated in Figure 1A having the first adjustment in a side view;
Figure 2A is a top view of the first embodiment of the tool holder having a second adjustment;
Figure 2B is a cross section of the first embodiment of the tool holder having the second adjustment in a side view;
Figure 3 is a perspective exploded view of the first embodiment of the tool holder;
Figure 4A is a top view of a second embodiment of a tool holder according to the invention having a first adjustment;
Figure 4B is a cross section of the second embodiment of the tool holder along the plane A - A indicated in Figure 4A having the first adjustment in a side view;
Figure 5A is a top view of the second embodiment of the tool holder having a second adjustment;
Figure 5B is a cross section of the second embodiment of the tool holder having the second adjustment in a side view and
Figure 6 is a perspective exploded view of the second embodiment of the tool holder according to the invention.

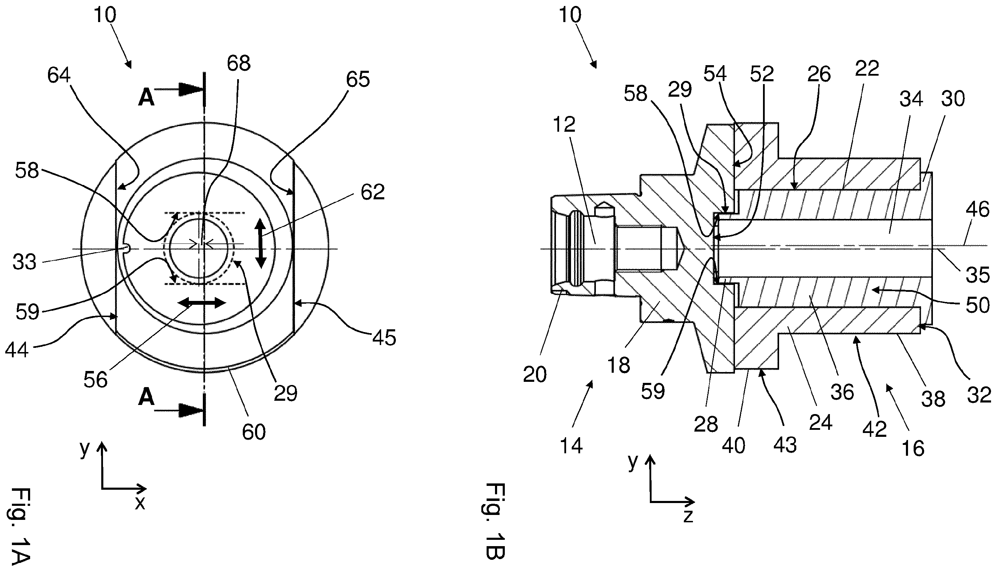

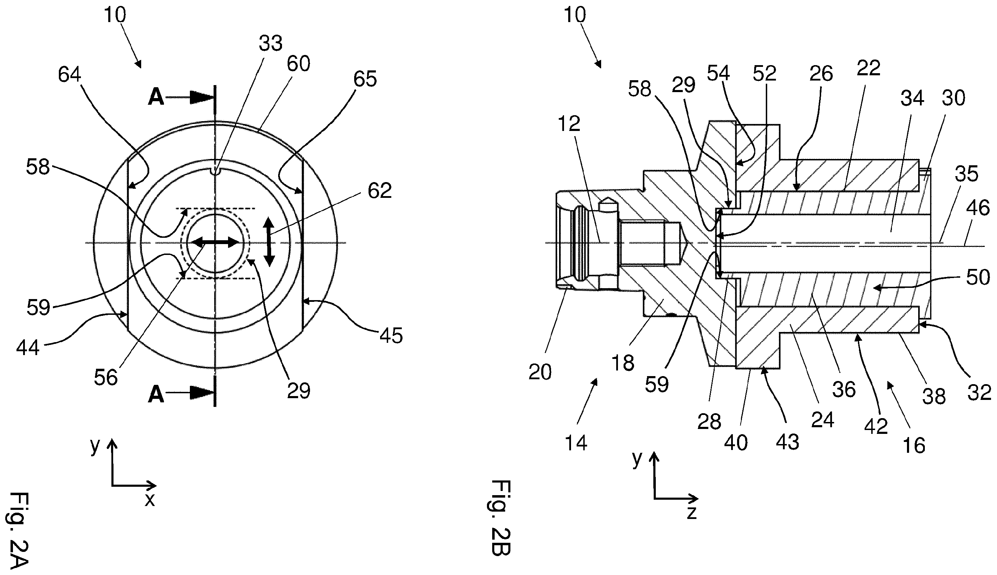

Figures 1A, 1B, 2A, 2B and 3 show a first embodiment of a tool holder 10 according to the invention. The tool holder 10, defines an axis of rotation 12 and along the axis of rotation has a proximal end section 14 and a distal end section 16. A cartesian coordinate system is depicted which defines the directions x, y and z, whereby the z-direction coincides with the axis of rotation 12. The y-direction is perpendicular to the z-axis and in figures 1A, 1B, 2A, 2B shown vertically. The x-direction is perpendicular to both, the y-direction and the z-direction. At its proximal end section 14 the tool holder 10 comprises a body portion 18, the body portion 18 including a mounting 20 adapted for direct or indirect attachment to a machine spindle (not shown).

The tool holder 10 at its distal end section 16 comprises an inner sleeve 22 and a slider 24. The inner sleeve 22 in a middle section essentially has a cylindrical contour formed by a rotationally symmetrical outer surface 26. In a bottom section a journal 28 is integrally formed with and, thus, fixedly attached to the inner sleeve 22. The journal 28 also has a cylindrical outer surface 29 with a smaller diameter than the middle section. The journal 28 serves as a third guide element. At the top the sleeve comprises a collar 30 abutting on a top surface 32 of the slider 24. The collar 30 has a radially inward notch 33 at a specific circumferential position which can be used to engage an adjustment tool for manually rotation the inner sleeve 22 relative to the slider 24.

Inside, the inner sleeve 22 is provided with a tool fitting bore 34 defining a center line 35 and being adapted to receive and hold a material removal tool (not shown). The cylindrical outer surface 26 and the tool fitting bore 34 are eccentric relative to each other, thereby forming a circumferential wall 36 having a varying wall thickness in the circumferential direction, see Figures 1B and 2B in comparison. The notch 33 indicates the direction of the maximum eccentricity of the inner sleeve and the minimum wall thickness, respectively. The journal 28 is coaxially arranged to the center line 35 of the tool fitting bore 34.

The slider 24 comprises a shaft portion 38 and a flange portion 40. The shaft portion 38 has a cylindrical outer surface 42. The flange portion 40 has a partially cylindrical outer surface 43 and two opposing parallel side faces 44, 45 flattening the cylinder circumference and serving as a fourth guide element. The cylindrical outer surface 42 and the partially cylindrical outer surface 43 are arranged coaxially around a common central axis 46 of the slider 24. Two threaded holes 47 are provided in the shaft portion 38 extending in a radial direction with regard to the axis of rotation 12 for receiving a clamping bolt 48 for fixation of the shaft 49 of a material removal tool (cropped) within the tool fitting bore 34. The slider 24 is fixable via its flange portion 38 to the body portion 18 by means of a screw connection (not shown).

Inside, the slider 24 is provided with a bore 50 for rotatably seating the inner sleeve 22. The bore 50 and the cylindrical outer surface 42 are eccentric relative to each other in order to partially compensate for a linear shift of the slider 24 as explained herein below.

The body portion 18 comprises a first pocket 52 formed into its upper side 54. In Top view (see Figures 1A and 2A) the first pocket 52 has a larger extension in a first direction 56 parallel to the x-direction indicated by double arrow 56 than in the y-direction perpendicular thereto. The first pocket 52 serves as a first guide element in the first direction 56. For this purpose, the first pocket 52 comprises two opposing parallel side faces 58, 59 both being oriented in planes parallel to the axis of rotation 12 and to the first direction 56. The side faces 58, 59 are symmetrical with respect to the axis of rotation 35. In other words, the distances in y-direction of both side faces 58, 59 to the axis of rotation are equal. The journal 28 is inserted into the first pocket 52, thereby creating a line contact with each of the side faces 58, 59. This allows a linear movement of the inner sleeve 22 relative to the body portion 18 in the first direction 56 perpendicular to the axis of rotation 12.

The body portion 18 also comprises a second groove 60 formed into its upper side 54 and serving as a second guide element. In Top view the second groove 60 is oriented in a second direction 62 perpendicular to the first direction 56. The second groove 60 comprises two op-posing parallel side faces 64, 65 both being oriented in planes parallel to the axis of rotation 12 and the second direction 62. The flange portion 40 of the slider 24 is inserted into the second groove 60, whereby the side faces 64, 65 of the second groove 60 abut the corresponding side faces 44, 45 of the flange portion, thereby creating a surface contact allowing a second linear movement of the slider 24 relative to the body portion 18 in the second direction 62 perpendicular to the axis of rotation 12.

The method for fine adjustment of the drill diameter of a rotating material removal tool being mounted on a tool holder according to Figures 1A through 3 is described below.

Generally, the inner sleeve 22 is rotated relative to the slider 24, thereby linearly moving the inner sleeve 22 relative to the body portion 18 in the first direction 56 perpendicular to the axis of rotation 12 and, at the same time, linearly moving the slider 24 relative to the body portion 18 in the second direction 62 perpendicular to the axis of rotation 12.

More particularly, upon rotating the inner sleeve 22 relative to the slider 24 clockwise from the angular position shown in Figure 1A by 90° into the angular position shown in Figure 2A the fitting bore 34 linearly travels along the first direction 56 from a position with maximum radial displacement 68 to a position with zero radial displacement as indicated by the distance of the center line 35 relative to the axis of rotation 12. The maximum radial displacement 68 corresponds to the amount of eccentricity of the inner sleeve 22. Thereby the center line 35 of the tool fitting bore 34 remains in the plane spanned by the axis of ration 12 and the x-direction. The linear movement of the inner sleeve 22 relative to the body portion 18 is aligned such that in the angular position according to Figure 2A, herein called center position, the center line 35 of the tool fitting bore 34 coincides with the axis of rotation 12.

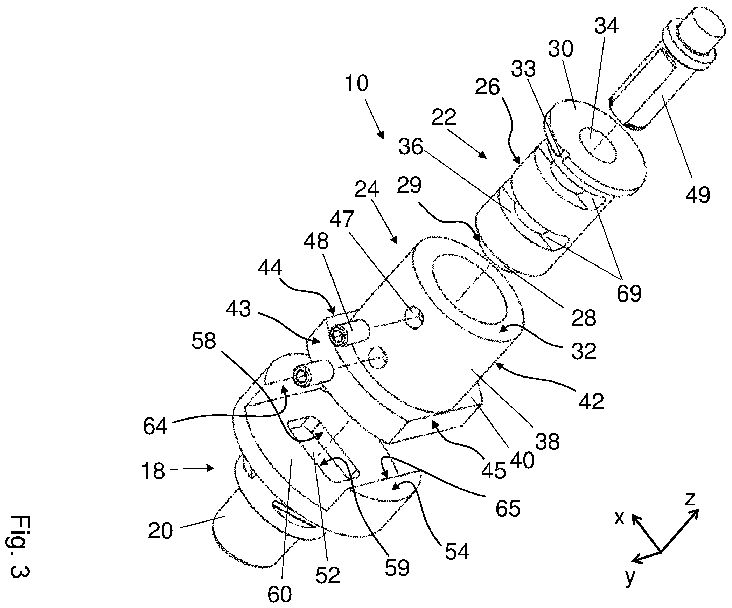

The inner sleeve 22 comprises an aperture 69 through its circumferential wall 36 for the pas-sage of the clamping bolt 48. The aperture 69 is formed as a slot hole extending in circumferential direction. The slot hole serves as a stop limiting the angle of rotation of the inner sleeve 22 relative to the slider 24. As shown in Figure 3 the slot hole extends in the circumferential direction over an angle of 180°. while the slot nut is arranged symmetrical around the angular position of maximum eccentricity. Therefore, other than shown in Figures 1 and 2, a rotation over 90° is possible to both sides of the center position resulting in a linear displacement in the first direction of twice the maximum radial displacement. Thus, it is possible to adjust the mate-rial removal tool in both directions in a direction parallel with the cutting edges. As normally only adjustment to bigger drill diameters is required it might be useful to also have the possibility to adjust the material removal tool in the negative direction, for example if it produces over-size holes. A typical range of adjustment is +1,2 mm and -0,2 mm.

Generally, the extent of linear movement in the first direction depends on the angle of rotation, the angular end positions of the rotary movement relative to the angular position of maximum eccentricity of the inner sleeve 22 and the amount of eccentricity of the inner sleeve 22.

Since the journal is coaxially arranged to the tool fitting bore 34 the guidance of the journal 28 within the first pocket 52 restricts the degree of freedom of movement of the tool fitting bore 34 to the first direction. In order to make sure that such displacement of the tool fitting bore 34 is in a direction parallel with the cutting edges of the inserts of a tool to be mounted on the tool holder 10, the threaded holes 44 are aligned relative to the second direction in same way a clamping surface of the tool is aligned relative to the cutting edges.

The component of the eccentric movement of the inner sleeve 22 perpendicular to the first direction 56, i.e. in the second direction 62, is compensated by the slider 24, which linearly moves along the second direction 62. I.e., while the center line 35 of the tool fitting bore 34 only moves in the first direction 56, the central axis 46 of the slider 24 only moves in the second direction 62. Due to the bore 50 and the cylindrical outer surface 42 being eccentric relative to each other the central axis 46 of the slider 24 moves along the second direction 62 from a position slightly above (i.e. in y-direction) the axis of rotation 12 as shown in Figure 1B to a position slightly below it as shown in figure 2B. This provides for a more symmetrical movement in the second direction 62 relative to the axis of rotation 12. Therefore, the maximum displacement of the slider 24 relative to the body portion 18 is only half the maximum radial displacement of the tool holder bore, thereby minimizing the imbalance of the tool holder as a whole.

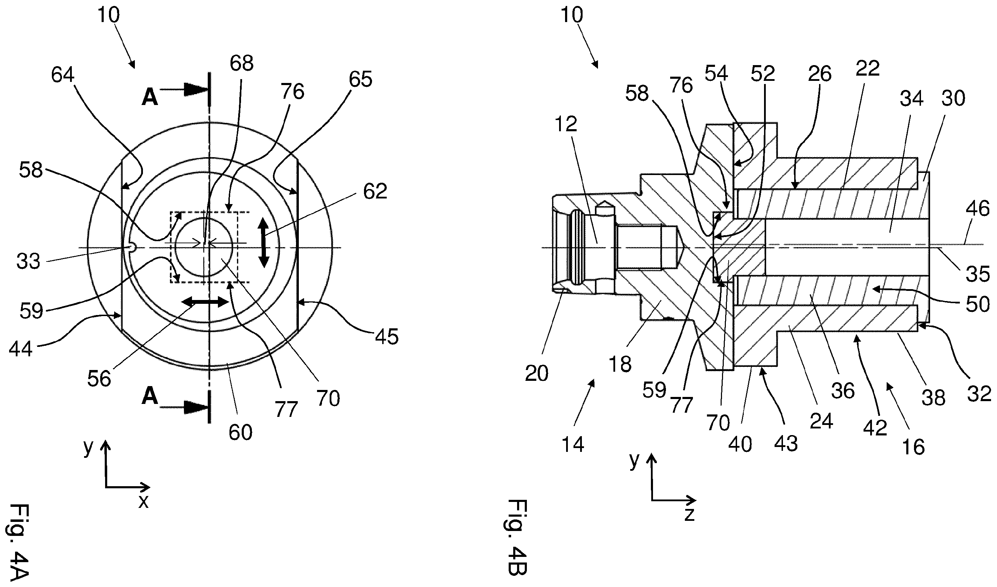

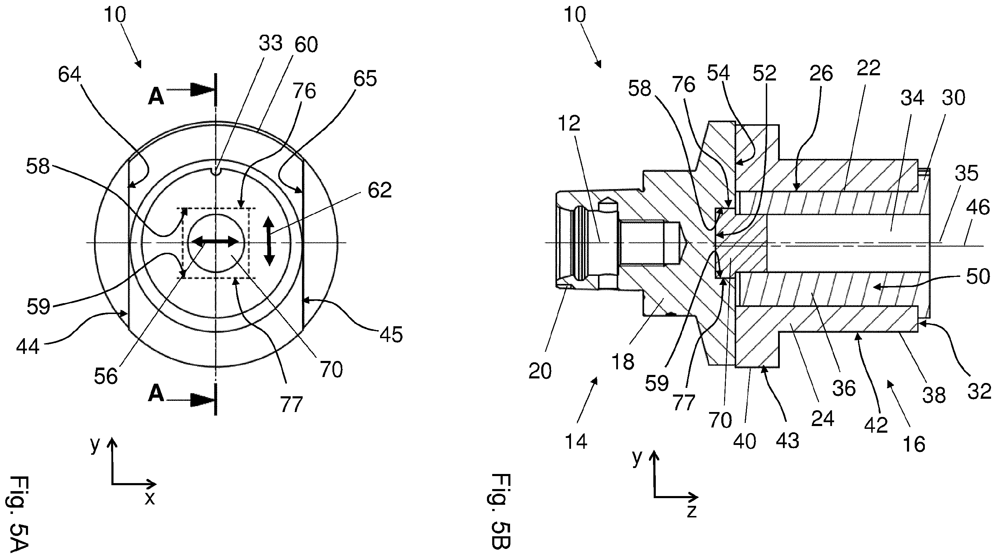

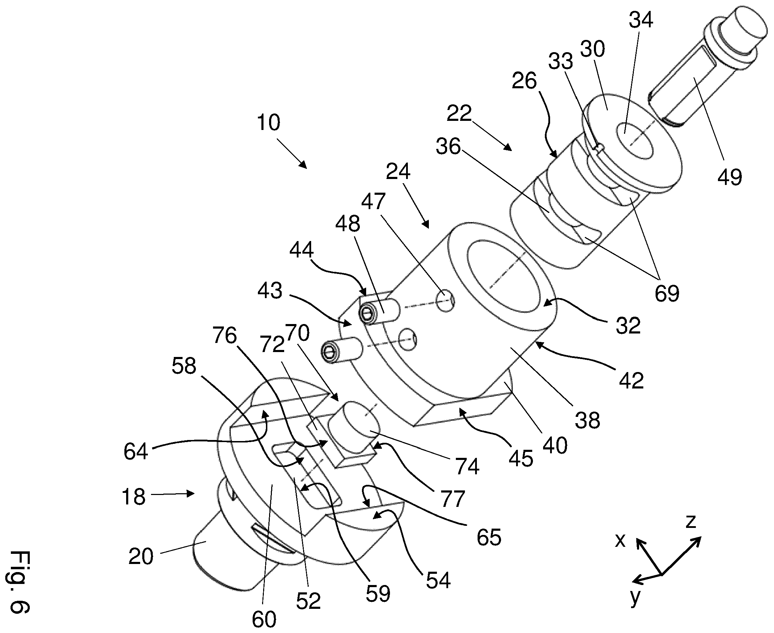

Figures 4A, 4B, 5A, 5B and 6 show a second embodiment of a tool holder 10 according to the invention. This tool holder essentially consists of the same components as described with regard to the first embodiment with the following differences.

The third guide element according to the second embodiment is formed by an insert element 70 instead of the journal 28. The insert element 70 comprises a slot nut section 72 and a pivot section 74. The slot nut section 72 has two opposing parallel side faces 76, 77 being guided within the first pocket 52. In particular, when the slot nut section 70 is inserted into the first pocket 52 the side faces 58, 59 of the first pocket abut the corresponding side faces 76, 77 of the slot nut section 70, thereby creating a surface contact allowing a linear movement of the inner sleeve 22 relative to the body portion 18 in the first direction 56 perpendicular to the axis of rotation 12.

The surface contact is superior to line contact established according to the first embodiment in terms of defined and low-wear guidance. On the other hand, it requires an extra part making the tool holder more expensive.

In order to allow a relative rotation between the inner sleeve 22 and the slider 24 despite the surface contact, the pivot section 74 of the insert element 70 is configured to protrude into and rotatably sit in the tool fitting bore 34, thereby forming a pivot bearing.

### REFERENCE SIGNS

- 10: tool holder
- 12: axis of rotation
- 14: proximal end section
- 16: distal end section
- 18: body portion
- 20: mounting
- 22: inner sleeve
- 24: slider
- 26: outer surface of the inner sleeve
- 28: journal
- 29: outer surface of the journal
- 30: collar
- 32: top surface of the slider
- 33: notch
- 34: tool fitting bore
- 35: center line of the tool fitting bore
- 36: circumferential wall of the inner sleeve
- 38: shaft portion
- 40: flange portion
- 42: outer surface of the shaft portion
- 43: partially cylindrical outer surface of the flange portion
- 44, 45: side face of the flange portion
- 46: central axis of the slider
- 47: threaded hole
- 48: clamping bolt
- 49: shaft of a material removal tool
- 50: bore
- 52: first pocket
- 54: upper side
- 56: first direction
- 58, 59: side face of the first pocket
- 60: second groove
- 62: second direction
- 64, 65: side face of the second groove
- 68: maximum radial displacement
- 69: aperture
- 70: insert element
- 72: slot nut section
- 74: pivot section
- 76, 77: side face of the slot nut

## Claims

1. An adjustable tool holder (10) for a rotating material removal tool, wherein the tool holder (10) defines an axis of rotation (12) and along the axis of rotation (12) has a proximal end section (14) and a distal end section (16), wherein the tool holder (10) at the proximal end section (14) comprises a body portion (18), the body portion (18) including a mounting (20) adapted for direct or indirect attachment to a machine spindle, wherein the tool holder (10) at the distal end section (16) comprises an inner sleeve (22) and a slider (24), the inner sleeve (22) comprising a tool fitting bore (34) for holding the material removal tool and a rotationally symmetrical outer surface (26), the tool fitting bore (34) and the rotationally symmetrical outer surface (26) being eccentric relative to each other, thereby forming a circumferential wall (36), **characterized in that** the slider (24) is arranged to rotatably receive the rotationally symmetrical outer surface (26) of the inner sleeve (22), the body portion (18) comprises a first guide element and a second guide element, the inner sleeve (22) further comprises a third guide element interacting with the first guide element, thereby allowing a linear movement of the inner sleeve (22) relative to the body portion (18) in a first direction (56) perpendicular to the axis of rotation (12), wherein the linear movement of the inner sleeve (22) relative to the body portion (18) is aligned such that a center line (35) of the tool fitting bore (34) in a center position coincides with the axis of rotation (12), the slider (24) comprises a fourth guide element interacting with the second guide element, thereby, allowing a linear movement of the slider (24) relative to the body portion (18) in a second direction (62) perpendicular to the axis of rotation (12), and the first direction (56) is different from the second direction (62).

2. The tool holder (10) according to claim 1,
**characterized in that** the first direction (56) is perpendicular to the second direction (62).

3. The tool holder (10) according to claim 1 or 2,
**characterized in that** the slider (24) comprises a bore (50) for rotatably seating the inner sleeve (22).

4. The tool holder (10) according to claim 3,
**characterized in that** a center line of the bore (50) in the slider (24) does not run through the center of mass of the slider (24).

5. The tool holder (10) according to anyone of the preceding claims, **characterized in that** the first guide element is a first groove or pocket (52) formed into the body portion (18).

6. The tool holder (10) according to claim 5,
**characterized in that** the third guide element comprises a journal (28) fixedly attached to the inner sleeve (22) and coaxially arranged to the center line (35) of the tool fitting bore (34), whereby the journal is inserted into and guided within the first groove or pocket (52).

7. The tool holder (10) according to claim 6,
**characterized in that** the journal (28) is integrally formed with the inner sleeve (22).

8. The tool holder (10) according to anyone of claims 1 to 5,
**characterized in that** the third guide element is formed by an insert element (70), the insert element (70) comprising a slot nut section (72) and a pivot section (74),
whereby the slot nut section (72) has two opposing parallel side faces (76, 77) being guided within the first groove or pocket (52) and
whereby the pivot section (74) protrudes into the tool fitting bore (34), thereby forming a pivot bearing.

9. The tool holder (10) according to anyone of the preceding claims,
**characterized in that** the second guide element is a second groove (60) or pocket formed into the body portion (18), whereby the slider (24) comprises a flange portion (40) providing two opposing parallel side faces (44, 45) being guided within the second groove (60) or pocket.

10. The tool holder (10) according to anyone of the preceding claims,
**characterized in that** the slider (24) comprises a flange portion (40) fixable to the body portion (18) by means of a screw connection.

11. The tool holder (10) according to anyone of the preceding claims,
**characterized in that** the slider (24) comprises a shaft portion (38), wherein at least one threaded hole (47) is provided in the shaft portion (38) in a radial direction with regard to the axis of rotation (12) for receiving a clamping bolt (48) for fixation of the material removal tool.

12. The tool holder (10) according to claim 11,
**characterized in that** the inner sleeve (22) comprises an aperture (69) through the circumferential wall (36) alignable with the threaded hole (47) for the passage of the clamping bolt (48).

13. The tool holder (10) according to claim 12,
**characterized in that** the aperture (69) is a slot hole extending in circumferential direction.

14. The tool holder (10) according to claim 13,
**characterized in that** the slot hole preferably has a longitudinal extension in the circumferential direction over an angle of at least 30°, preferably at least 60°, and at most 180°, preferably at most 120°.

15. Method for adjusting the drill diameter of a rotating material removal tool being mounted on a tool holder (10) according to one of the preceding claims,
wherein the inner sleeve (22) is rotated relative to the slider (24), thereby linearly moving the inner sleeve (22) relative to the body portion (18) in a first direction (56) perpendicular to the axis of rotation (12) and linearly moving the slider (24) relative to the body portion (18) in a second direction (62) perpendicular to the axis of rotation (12),
and wherein the first direction (56) is different from the second direction (62).

## Patentansprüche

1. Einstellbarer Werkzeughalter (10) für ein rotierendes Materialabtragswerkzeug, wobei der Werkzeughalter (10) eine Rotationsachse (12) definiert und entlang der Rotationsachse (12) einen proximalen Endabschnitt (14) und einen distalen Endabschnitt (16) aufweist, wobei der Werkzeughalter (10) an dem proximalen Endabschnitt (14) einen Körperabschnitt (18) umfasst, wobei der Körperabschnitt (18) eine Befestigung (20) einschließt, die zur direkten oder indirekten Anbringung an einer Maschinenspindel angepasst ist, wobei der Werkzeughalter (10) an dem distalen Endabschnitt (16) eine innere Hülse (22) und einen Schieber (24) umfasst, wobei die innere Hülse (22) eine Werkzeugaufnahmebohrung (34) zum Halten des Materialabtragswerkzeugs und eine rotationssymmetrische Außenfläche (26) umfasst, wobei die Werkzeugaufnahmebohrung (34) und die rotationssymmetrische Außenfläche (26) relativ zueinander exzentrisch sind, wodurch eine Umfangswand (36) gebildet wird,
**dadurch gekennzeichnet, dass** der Schieber (24) angeordnet ist, um die rotationssymmetrische Außenfläche (26) der inneren Hülse (22) drehbar aufzunehmen, der Körperabschnitt (18) ein erstes Führungselement und ein zweites Führungselement umfasst,
die innere Hülse (22) ferner ein drittes Führungselement umfasst, das mit dem ersten Führungselement zusammenwirkt, wodurch eine lineare Bewegung der inneren Hülse (22) relativ zu dem Körperabschnitt (18) in einer ersten Richtung (56) senkrecht zu der Rotationsachse (12) ermöglicht wird, wobei die lineare Bewegung der inneren Hülse (22) relativ zu dem Körperabschnitt (18) derart ausgerichtet ist, dass eine Mittellinie (35) der Werkzeugaufnahmebohrung (34) in einer Mittelstellung mit der Rotationsachse (12) zusammenfällt,
der Schieber (24) ein viertes Führungselement umfasst, das mit dem zweiten Führungselement zusammenwirkt, wodurch eine lineare Bewegung des Schiebers (24) relativ zu dem Körperabschnitt (18) in einer zweiten Richtung (62) senkrecht zu der Rotationsachse (12) ermöglicht wird,
und die erste Richtung (56) von der zweiten Richtung (62) verschieden ist.

2. Werkzeughalter (10) nach Anspruch 1,
**dadurch gekennzeichnet, dass** die erste Richtung (56) senkrecht zu der zweiten Richtung (62) ist.

3. Werkzeughalter (10) nach Anspruch 1 oder 2,
**dadurch gekennzeichnet, dass** der Schieber (24) eine Bohrung (50) zum drehbaren Aufnehmen der inneren Hülse (22) umfasst.

4. Werkzeughalter (10) nach Anspruch 3,
**dadurch gekennzeichnet, dass** eine Mittellinie der Bohrung (50) in dem Schieber (24) nicht durch den Massenschwerpunkt des Schiebers (24) verläuft.

5. Werkzeughalter (10) nach einem der vorhergehenden Ansprüche,
**dadurch gekennzeichnet, dass** das erste Führungselement eine erste Nut oder Tasche (52) ist, die in dem Körperabschnitt (18) ausgebildet ist.

6. Werkzeughalter (10) nach Anspruch 5,
**dadurch gekennzeichnet, dass** das dritte Führungselement einen Zapfen (28) umfasst, der fest an der inneren Hülse (22) angebracht und koaxial zu der Mittellinie (35) der Werkzeugaufnahmebohrung (34) angeordnet ist, wobei der Zapfen in die erste Nut oder Tasche (52) eingesetzt und innerhalb derselben geführt ist.

7. Werkzeughalter (10) nach Anspruch 6,
**dadurch gekennzeichnet, dass** der Zapfen (28) einstückig mit der inneren Hülse (22) ausgebildet ist.

8. Werkzeughalter (10) nach einem der Ansprüche 1 bis 5,
**dadurch gekennzeichnet, dass** das dritte Führungselement durch ein Einsatzelement (70) gebildet ist, wobei das Einsatzelement (70) einen Nutensteinabschnitt (72) und einen Schwenkabschnitt (74) umfasst,
wobei der Nutensteinabschnitt (72) zwei gegenüberliegende parallele Seitenflächen (76, 77) aufweist, die innerhalb der ersten Nut oder Tasche (52) geführt sind, und
wobei der Schwenkabschnitt (74) in die Werkzeugaufnahmebohrung (34) vorsteht, wodurch ein Schwenklager gebildet wird.

9. Werkzeughalter (10) nach einem der vorhergehenden Ansprüche,
**dadurch gekennzeichnet, dass** das zweite Führungselement eine zweite Nut (60) oder Tasche ist, die in dem Körperabschnitt (18) ausgebildet ist, wobei der Schieber (24) einen Flanschabschnitt (40) umfasst, der zwei gegenüberliegende parallele Seitenflächen (44, 45) bereitstellt, die innerhalb der zweiten Nut (60) oder Tasche geführt sind.

10. Werkzeughalter (10) nach einem der vorhergehenden Ansprüche,
**dadurch gekennzeichnet, dass** der Schieber (24) einen Flanschabschnitt (40) umfasst, der mittels einer Schraubverbindung an dem Körperabschnitt (18) befestigbar ist.

11. Werkzeughalter (10) nach einem der vorhergehenden Ansprüche,
**dadurch gekennzeichnet, dass** der Schieber (24) einen Schaftabschnitt (38) umfasst, wobei mindestens ein Gewindeloch (47) in dem Schaftabschnitt (38) in einer radialen Richtung in Bezug auf die Rotationsachse (12) zum Aufnehmen eines Klemmbolzens (48) zur Fixierung des Materialabtragswerkzeugs vorgesehen ist.

12. Werkzeughalter (10) nach Anspruch 11,
**dadurch gekennzeichnet, dass** die innere Hülse (22) eine Öffnung (69) durch die Umfangswand (36) umfasst, die mit dem Gewindeloch (47) für den Durchgang des Klemmbolzens (48) ausrichtbar ist.

13. Werkzeughalter (10) nach Anspruch 12,
**dadurch gekennzeichnet, dass** die Öffnung (69) ein Langloch ist, das sich in Umfangsrichtung erstreckt.

14. Werkzeughalter (10) nach Anspruch 13,
**dadurch gekennzeichnet, dass** das Langloch vorzugsweise eine Längserstreckung in der Umfangsrichtung über einen Winkel von mindestens 30°, vorzugsweise mindestens 60°, und höchstens 180°, vorzugsweise höchstens 120°, aufweist.

15. Verfahren zum Einstellen des Bohrdurchmessers eines rotierenden Materialabtragswerkzeugs, das an einem Werkzeughalter (10) nach einem der vorhergehenden Ansprüche montiert ist,
wobei die innere Hülse (22) relativ zu dem Schieber (24) gedreht wird, wodurch die innere Hülse (22) relativ zu dem Körperabschnitt (18) in einer ersten Richtung (56) senkrecht zu der Rotationsachse (12) linear bewegt wird und der Schieber (24) relativ zu dem Körperabschnitt (18) in einer zweiten Richtung (62) senkrecht zu der Rotationsachse (12) linear bewegt wird,
und wobei die erste Richtung (56) von der zweiten Richtung (62) verschieden ist.

## Revendications

1. Porte-outil réglable (10) pour un outil rotatif d'enlèvement de matière, lequel porte-outil (10) définit un axe de rotation (12) et présente, le long de l'axe de rotation (12), une section d'extrémité proximale (14) et une section d'extrémité distale (16), le porte-outil (10) comprenant, au niveau de la section d'extrémité proximale (14), une partie de corps (18), la partie de corps (18) incluant un support (20) adapté pour une fixation directe ou indirecte à une broche de machine, le porte-outil (10) comprenant, au niveau de la section d'extrémité distale (16), un manchon intérieur (22) et un coulisseau (24), le manchon intérieur (22) comprenant un alésage de montage d'outil (34) pour la réception de l'outil d'enlèvement de matière et une surface extérieure de révolution (26), l'alésage de montage d'outil (34) et la surface extérieure de révolution (26) étant excentrés l'un par rapport à l'autre, formant ainsi une paroi périphérique (36), **caractérisé en ce que**
le coulisseau (24) est disposé de manière à recevoir en rotation la surface extérieure de révolution (26) du manchon intérieur (22),
la partie de corps (18) comprend un premier élément de guidage et un second élément de guidage, le manchon intérieur (22) comprend en outre un troisième élément de guidage interagissant avec le premier élément de guidage, permettant ainsi un déplacement linéaire du manchon intérieur (22) par rapport à la partie de corps (18) dans une première direction (56) perpendiculaire à l'axe de rotation (12), le déplacement linéaire du manchon intérieur (22) par rapport à la partie de corps (18) étant aligné de sorte qu'une ligne centrale (35) de l'alésage de montage d'outil (34) en position centrale coïncide avec l'axe de rotation (12),
le coulisseau (24) comprend un quatrième élément de guidage interagissant avec le second élément de guidage, permettant ainsi un déplacement linéaire du coulisseau (24) par rapport à la partie de corps (18) dans une seconde direction (62) perpendiculaire à l'axe de rotation (12),
et la première direction (56) est différente de la seconde direction (62).

2. Porte-outil (10) selon la revendication 1, **caractérisé en ce que** la première direction (56) est perpendiculaire à la seconde direction (62).

3. Porte-outil (10) selon la revendication 1 ou 2, **caractérisé en ce que** le coulisseau (24) comprend un alésage (50) pour le logement en rotation du manchon intérieur (22).

4. Porte-outil (10) selon la revendication 3, **caractérisé en ce qu'**une ligne centrale de l'alésage (50) dans le coulisseau (24) ne traverse pas le centre de masse du coulisseau (24).

5. Porte-outil (10) selon l'une quelconque des revendications précédentes, **caractérisé en ce que** le premier élément de guidage est une première rainure ou un logement (52) formé dans la partie de corps (18).

6. Porte-outil (10) selon la revendication 5, **caractérisé en ce que** le troisième élément de guidage comprend un tourillon (28) fixé de manière fixe au manchon intérieur (22) et disposé coaxialement à la ligne centrale (35) de l'alésage de montage d'outil (34), le tourillon étant inséré dans et guidé à l'intérieur de la première rainure ou du logement (52).

7. Porte-outil (10) selon la revendication 6, **caractérisé en ce que** le tourillon (28) est formé d'une seule pièce avec le manchon intérieur (22).

8. Porte-outil (10) selon l'une quelconque des revendications 1 à 5,
**caractérisé en ce que** le troisième élément de guidage est formé par un élément d'insertion (70), l'élément d'insertion (70) comprenant une section d'écrou à rainure (72) et une section de pivot (74),
la section d'écrou à rainure (72) présentant deux faces latérales parallèles opposées (76, 77) guidées à l'intérieur de la première rainure ou du logement (52) et
la section de pivot (74) faisant saillie dans l'alésage de montage d'outil (34), formant ainsi un palier de pivotement.

9. Porte-outil (10) selon l'une quelconque des revendications précédentes,
**caractérisé en ce que** le second élément de guidage est une seconde rainure (60) ou un logement formé dans la partie de corps (18), le coulisseau (24) comprenant une portion de bride (40) présentant deux faces latérales parallèles opposées (44, 45) guidées à l'intérieur de la seconde rainure (60) ou du logement.

10. Porte-outil (10) selon l'une quelconque des revendications précédentes,
**caractérisé en ce que** le coulisseau (24) comprend une portion de bride (40) fixable à la partie de corps (18) au moyen d'un assemblage par vis.

11. Porte-outil (10) selon l'une quelconque des revendications précédentes,
**caractérisé en ce que** le coulisseau (24) comprend une portion d'arbre (38), au moins un trou taraudé (47) étant prévu dans la portion d'arbre (38) dans une direction radiale par rapport à l'axe de rotation (12) pour la réception d'un boulon de serrage (48) pour la fixation de l'outil d'enlèvement de matière.

12. Porte-outil (10) selon la revendication 11,
**caractérisé en ce que** le manchon intérieur (22) comprend une ouverture (69) à travers la paroi périphérique (36) alignable avec le trou taraudé (47) pour le passage du boulon de serrage (48).

13. Porte-outil (10) selon la revendication 12, **caractérisé en ce que** l'ouverture (69) est un trou oblong s'étendant dans la direction périphérique.

14. Porte-outil (10) selon la revendication 13, **caractérisé en ce que** le trou oblong présente de préférence une extension longitudinale dans la direction périphérique sur un angle d'au moins 30°, de préférence au moins 60°, et au plus 180°, de préférence au plus 120°.

15. Procédé de réglage du diamètre de perçage d'un outil rotatif d'enlèvement de matière monté sur un porte-outil (10) selon l'une quelconque des revendications précédentes, dans lequel le manchon intérieur (22) est tourné par rapport au coulisseau (24), déplaçant ainsi linéairement le manchon intérieur (22) par rapport à la partie de corps (18) dans une première direction (56) perpendiculaire à l'axe de rotation (12) et déplaçant linéairement le coulisseau (24) par rapport à la partie de corps (18) dans une seconde direction (62) perpendiculaire à l'axe de rotation (12), et dans lequel la première direction (56) est différente de la seconde direction (62).
